# NEUE EUROPÄISCHE PATENTSCHRIFT

(11) **EP 1 273 852 B2**
(45) Veröffentlichungstag und Bekanntmachung des Hinweises auf die Entscheidung über den Einspruch: **09.09.2015**
(45) Hinweis auf die Patenterteilung: 15.08.2012
(21) Anmeldenummer: 02013720.4
(22) Anmeldetag: 20.06.2002
(51) Int. Cl.: F24C 7/08, A21B 1/40

(54) **Verfahren zum Betrieb eines Gargeräts sowie Gargerät**
Method for operating a cooking appliance and cooking appliance
Procédé de fonctionnement d'un appareil de cuisson et appareil de cuisson

(30) Priorität: 06.07.2001 DE 10132304
(43) Veröffentlichungstag der Anmeldung: 08.01.2003
(73) Patentinhaber: BSH Hausgeräte GmbH, 81739 München (DE)
(72) Erfinder: Gerl, Josef, 83349 Palling (DE); Lappat, Hans, 84518 Garching/Alz (DE); Zimmermann, Christian, 84518 Garching/Alz (DE)

(56) Entgegenhaltungen:
- EP-A- 1 213 542
- CH-A- 678 996
- DE-A- 10 027 299
- DE-A- 19 533 514
- GB-A- 1 485 474
- US-A- 3 581 059
- US-A- 4 521 183
- US-A- 4 682 013
- US-A- 4 883 944
- US-A- 5 786 569

## Beschreibung

Die Erfindung bezieht sich auf ein Verfahren zum Betrieb eines Gargeräts sowie auf ein Gargerät mit einem Garraum, dem mittels einer Heizeinrichtung eine Wärmemenge zugeführt wird, wobei in einem Regelintervall eine Garraumtemperatur auf einen Sollwert geregelt wird und in einem dem Regelintervall folgenden Steuerintervall die Garraumtemperatur nicht geregelt wird, sondern unabhängig vom Sollwert dem Garraum eine bestimmte Wärmemenge von der Heizeinrichtung zugeführt wird

Aus der CH 6 789 965 ist ein Verfahren zum Wärmebehandeln von Speisen in einem Backofen bekannt, wobei ein Teil der Backofeneigenwärme zurückgewonnen wird, um sie wenigstens teilweise dem Backofen zukommen zu lassen. Das Dokument CH 6 789 965 offenbart den Oberbegriff des Anspruchs 1

Weiterhin ist aus der nachveröffentlichten EP 1 213 547 A2 ein Verfahren zum Betrieb eines Gargeräts mit einem Garraum bekannt, dem mittels einer Heizeinrichtung eine Wärmemenge zugeführt wird, wobei in einem Regelintervall eine Garraumtemperatur auf einen Sollwert geregelt wird und in einem dem Regelintervall folgenden Steuerintervall die Garraumtemperatur nicht geregelt wird, sondern dem Garraum keine Wärmemenge zugeführt wird.

Aus der DE 198 13 550 A1 ist ein Verfahren zum Betrieb eines Elektrowärmegeräts bekannt, in dem eine Leistungsfreigabe an eine Heizeinrichtung zuerst in einem vorgegebenen Steuervorgang erfolgt. Nach wenigstens einem Steuerintervall kann eine Regelung einsetzen, sobald von Temperaturfühlern gelieferte Daten in einem bestimmten, eine sichere Regelung ermöglichenden Bereich liegen.

Die Aufgabe der Erfindung besteht darin, ein Verfahren zum Betrieb eines Gargeräts sowie ein Gargerät zu schaffen, mittels dem in einer effektiven Weise dem Gargut eine Wärmeenergie zugeführt wird.

Diese Aufgabe wird mit einem Verfahren bzw. einem Gargerät gemäß den Merkmalen des Patentanspruches 1 bzw. des Patentanspruches 5 gelöst. Das Steuerintervall wird beendet, sobald die Garraumtemperatur unter eine vorgegebene Temperaturgrenze fällt, die unterhalb eines Toleranzbands des Sollwerts liegt, wobei nach dem Ende des Steuerintervalls die Garraumtemperatur in einer Nachregelung auf den Sollwert geregelt wird. Es werden in zuverlässiger Weise während des Steuerintervalls Temperaturspitzen vermieden, die beispielsweise auftreten können, wenn während eines Regelbetriebs eine Störgröße auf den Garraum ausgeübt wird, beispielsweise wenn während des Regelbetriebs der Garraum mit Gargut beschickt wird. Etwa unter Zuhilfenahme eines vorhandenen Temperatursensors wird das Steuerintervall beendet, sobald die Garraumtemperatur auf eine unter einer vorgegebenen Temperaturgrenze liegenden Temperatur fällt, bei der eine effektive Erwärmung des Garguts nicht mehr möglich ist. Um auch nach Ablauf des Steuerintervalls einen effektiven Heizbetrieb zu gewährleisten, wird im Anschluß an das Steuerintervall die Garraumtemperatur in einer Nachregelung auf den Sollwert geregelt.

In einer vorteilhaften Ausgestaltung der Erfindung ist die während des Steuerintervalls ungeregelt zugeführte, bestimmte Wärmemenge kleiner als eine Wärmemenge, die innerhalb des Steuerintervalls zur Regelung der Garraumtemperatur auf die Solltemperatur notwendig wäre. Somit kann während des Steuerintervalls der Differenzbetrag zwischen der Wärmemenge und der eigentlich zur Regelung notwendigen Wärmemenge eingespart werden. Zugleich kann die in der Gargerätemuffel gespeicherte Wärmeenergie genutzt werden, um das Gargut nachzuwärmen.

Es wird bei einer Zuführung einer bestimmten, vorgegebenen Wärmemenge während des Steuerintervalls das Absinken der Garraumtemperatur verzögert, wodurch sich gewünschte Bräunungs- bzw. Gareffekte am Gargut ergeben. Derartige Bräunungs- bzw. Gareffekte würden sich bei einem nicht verzögerten Absinken der Garraumtemperatur während des Steuerintervalls nicht einstellen.

Aus Sicherheitsgründen ist es bevorzugt, wenn die während des Steuerintervalls ungeregelt zugeführte, bestimmte Wärmemenge einer Verlustwärmemenge entspricht, die während des Steuerintervalls aus dem Garraum geleitet wird. Diese Verlustwärmemenge wird in Abhängigkeit von der Garraumtemperatur sowie in einem Leerzustand des Garraums, d.h. ohne Gargut, bestimmt. Dadurch wird vorteilhaft erreicht, dass sich die Garraumtemperatur während des Steuerintervalls nicht nachteilhaft auf eine Temperatur oberhalb der Solltemperatur erhöht, wenn der Garraum im Leerzustand bzw. mit einem, eine geringe Wärmeaufnahmefähigkeit aufweisenden Gargut beheizt wird.

Um in möglichst einfacher Weise einen geeigneten Zeitpunkt für den Übergang vom Regelintervall in das Steuerintervall festzulegen, wird vorteilhaft der Zeitpunkt gewählt, zu dem eine vorgegebene Wärmemenge, vorzugsweise eine Wärmemenge zwischen 400 und 600 Wh, seit dem Beginn des Heizbetriebs dem Garraum zugeführt worden ist. Bei derartigen Wärmemengen wird davon ausgegangen, dass erfahrungsgemäß ein eingeschwungener Regelvorgang vorliegt, d.h. die Garraumtemperatur befindet sich zum dauernden Verbleib innerhalb eines Toleranzbereich des Sollwerts der Garraumtemperatur.

Ein Ausführungsbeispiel der Erfindung ist anhand der beigefügten Zeichnungen beschrieben. Es zeigen:
Figur 1 einen Backofen in einer schematischen Seitenansicht in Schnittdarstellung; und
Figur 2 ein Temperatur- sowie ein Heizleistungsdiagramm.

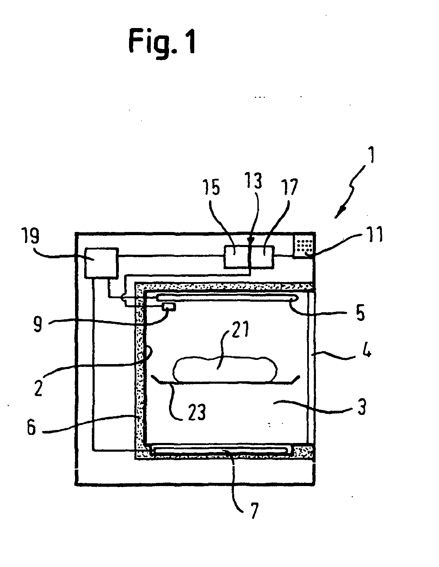

Gemäß der Figur 1 weist ein Backofen 1 eine Backofenmuffel 2 auf, die von einer Wärmeisolierung 6 umgeben ist. Die Backofenmuffel 2 umgibt einen Garraum 3 auf, der über eine Backofentür 4 verschließbar ist. Im Garraum 3 ist ein Gargutträger 23 angeordnet, auf dem ein Gargut 21 liegt. Die Aufheizung des Garraums 3 erfolgt über einen Oberhitzeheizkörper 5 und einen Unterhitzeheizkörper 7. Zusätzlich weist der Backofen 1 einen Temperatursensor 9 auf, der im Garraum 3 angeordnet ist und eine Garraumtemperatur ermittelt sowie ein entsprechendes Temperatursignal an einen Prozessor 13 weiterleitet.

An der Frontseite des Backofens 1 ist ein Bedienfeld 11 vorgesehen, in das ein Benutzer Sollwerte von Garraumtemperaturen sowie gegebenenfalls weitere, für einen Garbetrieb erforderliche Parameter eingeben kann. Das Bedienfeld 11 ist mit dem Prozessor 13 verbunden, der gemäß der Figur 1 eine Regeleinrichtung 15 sowie eine Speichereinrichtung 17 aufweist. Der Prozessor 13 ist weiterhin in Signalverbindung mit einer Steuereinrichtung 19, mit der die Oberhitze -und Unterhitzeheizkörper 5, 7 ansteuerbar sind.

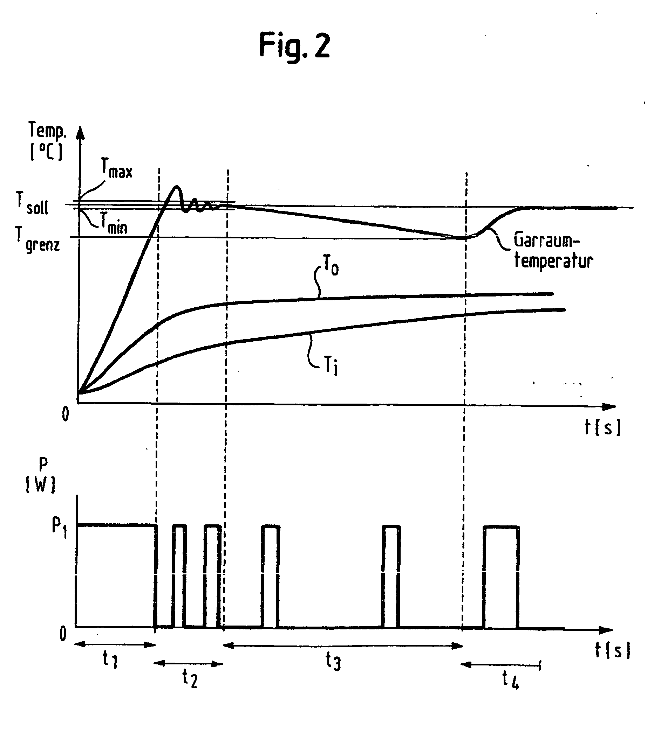

In der Figur 2 sind ein Temperatur- sowie ein Heizleistungsdiagramm gezeigt, die beispielhaft einen Heizbetrieb des Backofens 1 wiedergeben. Wie aus dem Heizleistungsdiagramm hervorgeht, ist im vorliegenden Ausführungsbeispiel die Heizleistung P nicht stufenlos veränderbar, sondern wechselt diese zwischen Null und einer maximalen Heizleistung P₁ ab. Entsprechend der dem Garraum 3 zuzuführenden Wärmemenge wird dabei die Zeitdauer eingestellt, in der die Heizkörper 5, 7 mit der maximalen Heizleistung P₁ betrieben werden. Die Erfindung ist jedoch nicht auf eine derartige Zufuhr der Wärmemenge in den Garraum 3 beschränkt; vielmehr ist auch eine Einstellung der Höhe der Heizleistung P mittels eines Leistungsreglers möglich.

Zum Zeitpunkt t=0 wird ein Sollwert Tₛₒₗₗ der Garraumtemperatur in das Bedienfeld 11 eingegeben, wodurch zugleich der Heizbetrieb des Backofens 1 gestartet ist. Um die Garraumtemperatur in möglichst kurzer Zeit auf den eingegebenen Sollwert Tₛₒₗₗ zu erhöhen, werden während eines festgelegten Anheizintervalls t₁ die Ober - und Unterhitzeheizkörper 5, 7 durch die Steuereinrichtung 19 mit der maximalen Leistung P₁ beaufschlagt. Dadurch ist die Garraumtemperatur bis zum Ende des Aufheizintervalls t₁ bis nahe an den Sollwert Tₛₒₗₗ angestiegen. Zugleich ist auch die Backofenmuffel 2 bis zu einer Temperatur nahe dem Sollwert Tₛₒₗₗ aufgewärmt. Zeitlich verzögert sowie mit einem geringeren Temperaturanstieg folgen eine Temperatur Tₒ an der Gargutoberfläche sowie eine im Gargutinneren vorhandene Temperatur Tᵢ, die aufgrund eines Wärmewiderstandes an der äußeren Schicht des Garguts 21 unterhalb der Temperatur Tₒ liegt.

Nach dem Aufheizintervall t₁ starten die Regeleinrichtung 13, beispielsweise ein PI-Regler, die Regelung der Garraumtemperatur auf den Sollwert Tₛₒₗₗ. Hierzu ermittelt die Regeleinrichtung 13 anhand des Temperatursignals des Temperatursensors 9 eine geeignete Stellgröße. Die Stellgröße wird zu der Steuereinrichtung 19 geleitet, die in Abhängigkeit davon eine Zeitdauer festlegt, in der die Heizkörper 5, 7 derart mit einer Leistung P₁ betrieben werden, dass sich die Garraumtemperatur ihrem Sollwert Tₛₒₗₗ nähert und zum dauernden Verbleib in ein Toleranzband des Sollwerts Tₛₒₗₗ eintritt, das die Differenz zwischen den Temperaturen Tₘₐₓ und Tₘᵢₙ ist und üblicherweise in einer Größenordnung von ±5 bis 10K liegt.

Das Regelintervall t₂ wird zu einem Zeitpunkt beendet, zu dem eine vorgegebene Wärmemenge, vorzugsweise eine Wärmemenge zwischen 400 und 600 Wh, seit dem Beginn des Heizbetriebs dem Garraum 3 zugeführt worden ist. Bei derartigen Wärmemengen wird davon ausgegangen, dass erfahrungsgemäß die Garraumtemperatur zum dauernden Verbleib in das Toleranzband (Tₘₐₓ-Tₘᵢₙ) des Sollwerts Tₛₒₗₗ der Garraumtemperatur eingetreten ist sowie die Backofenmuffel 2 ausreichend erwärmt ist und durch ihre gespeicherte Wärmeenergie zu einer Erwärmung des Garguts 21 beiträgt. Zu diesem Zeitpunkt befindet sich, wie aus der Figur 2 hervorgeht, die im Gargutinneren vorhandene Temperatur Tᵢ noch deutlich unterhalb der Temperatur Tₒ der Gargutoberfläche.

Nach dem Regelintervall t₂ folgt erfindungsgemäß das Steuerintervall t₃, in welchem die Regeleinrichtung 15 die Garraumtemperatur nicht mehr regelt; vielmehr steuert die Steuereinrichtung 19 unabhängig von der Regeleinrichtung 15 die Heizkörper 5, 7 derart an, dass eine bestimmte Wärmemenge zugeführt wird. Vorteilhafterweise ist diese Wärmemenge kleiner als eine Wärmemenge, die im Steuerintervall t₃ für eine Regelung der Garraumtemperatur notwendig wäre. Die während des Steuerintervalls t₃ dem Gargut 21 zugeführte Wärmemenge setzt sich im wesentlichen zusammen aus der mittels der Heizkörper 5, 7 bereitgestellten Wärmemenge und zu einem großen Teil aus der in der Backofenmuffel 2 gespeicherten Wärmemenge. Diese in der Backofenmuffel 2 gespeicherte Wärmeenergie wird dem Gargut 21 gleichmäßig zugeführt, wodurch die im Gargutinneren vorhandene Temperatur Tᵢ während des Steuerintervalls t₃ besonders schonend erhöht wird.

Das Steuerintervall t₃ wird beendet, sobald die Garraumtemperatur unter einen vorgegebenen Temperaturgrenzwert T_{grenz} fällt. Derartige Temperaturgrenzwerte sind beispielsweise in tabellarischer Form in der Speichereinrichtung 17 in Abhängigkeit von dem Sollwert Tₛₒₗₗ der Garraumtemperatur gespeichert und liegen typischerweise in einer Größenordnung von etwa 25 bis 35K unterhalb der Solltemperatur Tₛₒₗₗ.

## Patentansprüche

1. Verfahren zum Betrieb eines Gargeräts (1) mit einem Garraum (3), dem mittels einer Heizeinrichtung (5, 7) eine Wärmemenge zugeführt wird, wobei in einem Regelintervall (t₂) eine Garraumtemperatur auf einen Sollwert (Tₛₒₗₗ) geregelt wird, und in einem dem Regelintervall (t₂) folgenden Steuerintervall (t₃) die Garraumtemperatur nicht geregelt wird, sondern unabhängig vom Sollwert (Tₛₒₗₗ) dem Garraum (3) von der Heizeinrichtung (5, 7) eine bestimmte Wärmemenge zugeführt wird,
**dadurch gekennzeichnet, dass**
das Steuerintervall (t₃) beendet wird, sobald die Garraumtemperatur unter eine vorgegebene Temperaturgrenze (T_{grenz}) fällt, die unterhalb eines Toleranzbands (Tₘₐₓ-Tₘᵢₙ) des Sollwerts (Tₛₒₗₗ) liegt,
und dass nach dem Ende des Steuerintervalls (t₃) die Garraumtemperatur in einer Nachregelung auf den Sollwert (Tₛₒₗₗ) geregelt wird.

2. Verfahren nach Anspruch 1, **dadurch gekennzeichnet, dass** die während des Steuerintervalls (t₃) ungeregelt zugeführte Wärmemenge kleiner ist als eine Wärmemenge, die die innerhalb des Steuerintervalls (t₃) zur Regelung der Garraumtemperatur auf die Solltemperatur notwendig wäre.

3. Verfahren nach Anspruch 2, **dadurch gekennzeichnet, dass** die während des Steuerintervalls (t₃) ungeregelt zugeführte Wärmemenge einer Verlustwärmemenge entspricht, die während des Steuerintervalls (t₃) aus dem Garraum (3) geleitet wird.

4. Verfahren nach einem der vorhergehenden Ansprüche, **dadurch gekennzeichnet, dass** das Regelintervall (t₂) nach Zuführung einer vorgegebenen Wärmemenge, vorzugsweise 400 bis 600 Wh, beendet wird.

5. Gargerät mit einem Garraum (3), einer Heizeinrichtung (5, 7) zum Zuführen einer Wärmemenge in den Garraum (3) und einer Regeleinrichtung (13) zur Regelung einer Garraumtemperatur auf einen Sollwert (Tₛₒₗₗ) in einem Regelintervall (t₂), wobei eine Steuereinrichtung (19) vorgesehen ist, mittels der in einem dem Regelintervall (t₂) folgenden Steuerintervall (t₃) die Garraumtemperatur nicht geregelt wird, sondern unabhängig vom Sollwert (Tₛₒₗₗ) dem Garraum (3) eine bestimmte Wärmemenge von der Heizeinrichtung (5, 7) zugeführt wird,
**dadurch gekennzeichnet, dass** das Steuerintervall (t₃) endet, sobald die Garraumtemperatur unter eine vorgegebene Temperaturgrenze (T_{grenz}), welche unterhalb eines Toleranzbands (Tₘₐₓ-Tₘᵢₙ) des Sollwerts (Tₛₒₗₗ) liegt, fällt, wobei die Regeleinrichtung (13) die Garraumtemperatur nach dem Ende des Steuerintervalls (t₃) in einer Nachregelung auf den Sollwert (Tₛₒₗₗ) regelt.

## Claims

1. Method for operating a cooking device (1) having a cooking cabinet (3) to which a quantity of heat is supplied by means of a heating device (5, 7), wherein a cooking cabinet temperature is regulated to a target value (T_{target}) in a regulation interval (t₂), and in a control interval (t₃) following the regulation interval (t₂) the cooking cabinet temperature is not regulated, but a particular quantity of heat is supplied by the heating device (5, 7) to the cooking cabinet (3) regardless of the target value (T_{target}),
**characterised in that**
the control interval (t₃) is terminated as soon as the cooking cabinet temperature falls below a predefined temperature limit (Tₗᵢₘᵢₜ), which lies below a tolerance band (Tₘₐₓ-Tₘᵢₙ) of the target value (T_{target}),
and **in that** after the end of the control interval (t₃) the cooking cabinet temperature is regulated to the target value (T_{target}) in a readjustment procedure.

2. Method according to claim 1, **characterised in that** the quantity of heat supplied unregulated during the control interval (t₃) is less than a quantity of heat which would be necessary within the control interval (t₃) for regulating the cooking cabinet temperature to the target temperature.

3. Method according to claim 2, **characterised in that** the quantity of heat supplied unregulated during the control interval (t₃) corresponds to a quantity of lost heat which is conducted out of the cooking cabinet (3) during the control interval (t₃).

4. Method according to one of the preceding claims, **characterised in that** the regulation interval (t₂) is terminated after a predefined quantity of heat, preferably 400 to 600 Wh, has been supplied.

5. Cooking device having a cooking cabinet (3), a heating device (5, 7) for supplying a quantity of heat to the cooking cabinet (3) and a regulation device (13) for regulating a cooking cabinet temperature to a target value (T_{target}) in a regulation interval (t₂), wherein a control device (19) is provided, by means of which the cooking cabinet temperature is not regulated in a control interval (t₃) following the regulation interval (t₂), but a particular quantity of heat is supplied by the heating device (5, 7) to the cooking cabinet (3) regardless of the target value (T_{target}),
**characterised in that** the control interval (t₃) ends as soon as the cooking cabinet temperature falls below a predefined temperature limit (Tₗᵢₘᵢₜ) which lies below a tolerance band (Tₘₐₓ-Tₘᵢₙ) of the target value (T_{target}), wherein after the end of the control interval (t₃) the regulation device (13) regulates the cooking cabinet temperature to the target value (T_{target}) in a readjustment procedure.

## Revendications

1. Procédé pour le fonctionnement d'un appareil de cuisson (1) comprenant une chambre de cuisson (3), auquel une quantité de chaleur est amenée au moyen d'un dispositif de chauffage (5, 7), procédé dans lequel une température de chambre de cuisson est réglée dans un intervalle de réglage (t₂) sur une valeur de consigne (Tₛₒₗₗ), et la température de la chambre de cuisson n'est pas réglée dans un intervalle de commande (t₃) suivant l'intervalle de réglage (t₂), mais une quantité de chaleur définie est amenée par le dispositif de chaleur (5, 7) à la chambre de cuisson (3) indépendamment de la valeur de consigne (Tₛₒₗₗ), **caractérisé en ce que** l'intervalle de commande (t₃) est terminé dès que la température de la chambre de cuisson descend au-dessous d'une limite de température (T_{grenz}) prédéfinie, qui est inférieure à une bande de tolérance (Tₘₐₓ-Tₘᵢₙ) de la valeur de consigne (Tₛₒₗₗ), et en que la température de la chambre de cuisson soit réglée après la fin de l'intervalle de commande (t₃) lors d'un réglage ultérieur sur la valeur de consigne (Tₛₒₗₗ).

2. Procédé selon la revendication 1, **caractérisé en ce que** la quantité de chaleur amenée de façon non régulée pendant l'intervalle de commande (t₃) est inférieure à une quantité de chaleur qui serait nécessaire dans l'espace de l'intervalle de commande (t₃) pour le réglage de la température de la chambre de cuisson sur la température de consigne.

3. Procédé selon la revendication 2, **caractérisé en ce que** la quantité de chaleur amenée de façon non régulée pendant l'intervalle de commande (t₃) correspond à une quantité de chaleur perdue qui est acheminée hors de l'espace de cuisson (3) pendant l'intervalle de commande (t₃).

4. Procédé selon l'une des revendications précédentes, **caractérisé en ce que** l'intervalle de réglage (t₂) est terminé après l'arrivée d'une quantité de chaleur prédéfinie, de préférence 400 à 600 Wh.

5. Appareil de cuisson comprenant une chambre de cuisson (3), un dispositif de chauffage (5, 7) pour l'arrivée d'une quantité de chaleur dans la chambre de cuisson (3) et un dispositif de réglage (13) pour le réglage d'une température de la chambre de cuisson sur une valeur de consigne (Tₛₒₗₗ) dans un intervalle de réglage (t₂), un dispositif de commande (19) étant prévu, au moyen duquel la température de la chambre de cuisson n'est pas réglée dans un intervalle de commande (t₃) suivant l'intervalle de réglage (t₂), mais une quantité de chaleur définie est amenée par le dispositif de chauffage (5, 7) à la chambre de cuisson (3) indépendamment de la valeur de consigne (Tₛₒₗₗ), **caractérisé en ce que** l'intervalle de commande (t₃) se termine dès que la température de la chambre de cuisson descend au-dessous d'une limite de température (T_{grenz}) prédéfinie, qui est inférieure à une bande de tolérance (Tₘₐₓ-Tₘᵢₙ) de la valeur de consigne (Tₛₒₗₗ), le dispositif de réglage (13) réglant la température de la chambre de cuisson après la fin de l'intervalle de commande (t₃) lors d'un réglage ultérieur sur la valeur de consigne (Tₛₒₗₗ).
